(19) Europäisches Patentamt
European Patent Office
Office européen des brevets

(11) Veröffentlichungsnummer: **0 286 819 B1**

(12) # EUROPÄISCHE PATENTSCHRIFT

(45) Veröffentlichungstag der Patentschrift: **17.06.92**

(51) Int. Cl.⁵: **G01B 21/06**, G02B 6/44, G01B 5/04

(21) Anmeldenummer: **88103313.8**

(22) Anmeldetag: **03.03.88**

(54) **Verfahren zur Bestimmung des Längenunterschiedes zwischen Lichtleitfaser und Lichtleitaderhülle.**

(30) Priorität: **13.04.87 DE 3712516**

(43) Veröffentlichungstag der Anmeldung:
**19.10.88 Patentblatt 88/42**

(45) Bekanntmachung des Hinweises auf die Patenterteilung:
**17.06.92 Patentblatt 92/25**

(84) Benannte Vertragsstaaten:
**AT BE CH DE FR GB IT LI NL SE**

(56) Entgegenhaltungen:
**EP-A- 0 160 632**
**EP-A- 0 193 940**
**DE-A- 3 425 649**

(73) Patentinhaber: **SIEMENS AKTIENGESELLSCHAFT**
**Wittelsbacherplatz 2**
**W-8000 München 2(DE)**

(72) Erfinder: **Oestreich, Ulrich, Dipl.-Ing.**
**Karl-Witthalm-Strasse 15**
**W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Bestimmung einer dem Längenunterschied zwischen einer Lichtleitfaser und einer Lichtleitaderhülle proportionalen Meßgröße, wobei die die Lichtleitfaser lose enthaltende Lichtleitaderhülle mindestens eine Kühlstrecke durchläuft.

Um eine gewisse Längenzuordnung zwischen Lichtleitfasern und einer durch Extrusion aufgebrachten schlauchförmigen Außenhülle zu erhalten, sind Bündeladerlinien bekannt, bei denen durch ausreichende Kopplung der Lichtleitfaser an die Außenhülle eine gewisse Lichtleitfaserlänge eingestellt wird. Die Kopplung zwischen Lichtleitfaser und Hülle wird dabei durchwegs durch das Umschlingen mindestens eines großen leicht laufenden Speicherrades erreicht, das sich auf einer vorgegebenen Temperatur befindet. Eine nachfolgende Kühlung bewirkt eine Längenänderung der Hülle, womit eine Längenzuordnung von Lichtleitfaser zur Hülle erreicht wird.

Der dabei erhaltene tatsächliche Längenunterschied zwischen Lichtleitfaser und Hülle kann durch die bisher verwendeten Meßeinrichtungen nicht mit ausreichender Genauigkeit festgestellt werden. Ein Meßverfahren ist aus der DE-OS 34 25 649 bekannt, wobei die Länge der Lichtleitfaser in der Hülle dadurch erfaßt wird, daß die Einzugsgeschwindigkeit der Lichtleitfaser vor dem Extruder und die Geschwindigkeit der Lichtleitader hinter der Kühlstrecke bestimmt wird. Bei einer derartigen vergleichenden Geschwindigkeitsmessung zwischen Lichtleitfaser und Hülle wird mit allen bisher bekannten Längenmeßverfahren höchstens eine Genauigkeit in der Größenordnung von einigen $10^{-3}$ erreicht. Da die festzustellenden Längenunterschiede zwischen Lichtleitfaser und Hülle im Bereich zwischen 0 und $5 \times 10^{-3}$ liegen, können systematische Abweichungen zwischen gewünschter und erzielter Faserlänge in der losen Hülle nicht mit genügend großer Genauigkeit festgestellt werden.

Der Erfindung liegt die Aufgabe zugrunde, in einer Lichtleitaderlinie die Längenzuordnung zwischen Lichtleitfaser und Lichtleitaderhülle möglichst exakt zu bestimmen.

Gemäß der Erfindung wird dies bei einem Verfahren der eingangs genannten Art dadurch erreicht, daß die Geschwindigkeit der Lichtleitaderhülle sowohl vor als auch nach der Kühlstrecke bestimmt wird und daß die gesuchte Meßgröße durch Differenzbildung der beiden gemessenen Geschwindigkeiten gebildet wird.

Die Geschwindigkeit der Lichtleitaderhülle wird zunächst vor der Kühlstrecke, d.h. bei einer konstant erhöhten Temperatur gemessen. Die anfängliche Faserfehllänge wird durch die Lichtleitaderabmessungen und z.B. durch Umlauf der Lichtleitader um mindestens ein Speicherrad recht genau festgelegt. Da die Abkühlung der Lichtleitader nach der Kühlstrecke eine definierte Schrumpfung und Geschwindigkeitserhöhung der Lichtleitaderhülle bewirkt, erfolgt eine weitere Geschwindigkeitsmessung an dieser Stelle. Durch die aus einer Differenzbildung der beiden gemessenen Aderhüllengeschwindigkeiten erhaltene Meßgröße wird die Längenzuordnung zwischen Lichtleitfaser und Hülle besonders exakt festgelegt. Da in einer Lichtleitaderlinie die Geschwindigkeitsmessungen an der Lichtleitaderhülle unter definierten und völlig vergleichbaren Verhältnissen erfolgt, wird nun eine äußerst genaue Messung, und damit auch eine Einstellung und Kontrolle der relativen Lichtleitfaserlänge ermöglicht. Da immer nur an der Lichtleitader gemessen wird (im Gegensatz zum Stand der Technik, wo Ader und Faser gemessen werden), sind in beiden Fällen gleiche und mit stark reduzierten Fehlern arbeitende Meßverfahren und Meßmittel einsetzbar, was den Aufwand verringert und die Meßgenauigkeit verbessert. Da an den Lichtleitadern gemessen wird, können vorteilhaft Meßräder verwendet werden, die groß sind und von der Ader soweit umschlungen werden, daß ein Schlupf zwischen Ader und Meßrad vernachlässigbar wird. Gemäß einer besonders vorteilhaften Ausführungsform der Erfindung ist vorgesehen, daß die Geschwindigkeitsmessung durch Impulszählung an Meßrädern vor und nach der Kühlstrecke vorgenommen wird.

Dabei können insbesondere - aus anderen Gründen ohnehin vorhandene - Speicherräder gleichzeitig als Meßräder eingesetzt werden. Wenn die Speicherräder selbst zur Geschwindigkeitsbestimmung herangezogen werden, entfallen zusätzliche Geschwindigkeitsmeßeinrichtungen.

Unter besonders vorteilhafter Verwendung von großen Meß- bzw. Speicherrädern und durch an den Rädern angebrachte Impulsmarken oder durch mit der Achse verbundenen eigenen Impulsgebern wird die Lauflänge der Lichtleitaderhülle vor und nach Abkühlung in einfacher Weise äußerst genau bestimmt.

Weiterbildungen der Erfindung sind in den abhängigen Ansprüchen wiedergegeben.

Das erfindungsgemäße Verfahren sowie die Weiterbildungen werden nachfolgend anhand von Zeichnungen näher erläutert. Es zeigen:

FIG 1 eine schematisch dargestellte Lichtleitaderlinie mit einer Einrichtung gemäß der Erfindung,

FIG 2 ein von einer Lichtleitader umschlungenes Speicherrad.

Die in FIG 1 dargestellte horizontale Fertigungslinie weist ein Ablaufgestell AG auf, das mit Vorratsspulen VS11,VS22,VS21 und VS22 bestückt ist. Über eine Faserbremse FB1 bzw. FB2 werden die ablaufenden Lichtleitfasern LWL1 und LWL2 nach Umlenkung durch entsprechende Rollen in bekannter Weise zu einem

Bündel zusammengefaßt, das mit LWL12 bezeichnet ist. Die Fasern können über einen Rohrspeicher partiell miteinander SZ-verseilt sein. Anstelle eines derartigen Bündels von Lichtleitfasern ist es auch möglich, nur eine einzelne Lichtleitfaser in der nachfolgend beschriebenen Weise weiter zu behandeln.

Das Lichtleitfaserbündel LWL12 gelangt (gegebenenfalls nach Zuführung einer Füllmasse) zu einem Extruder EX, durch den die Lichtleitaderhülle H in Form eines Kunststoffmateriales auf das einlaufende Lichtleitfaserbündel LWL12 aufgebracht wird. Am Ausgang des Extruders EX läuft die mit einer Hülle H versehene Lichtleitader LWA unmittelbar, d.h. ohne Durchgang durch eine Kühlstrecke in eine erste temperierte Kammer TK1 (Temperatur $\vartheta_1$) ein, die zwei große leichtlaufende (ggf. durch einen Motor angetriebene Speicherräder SR11 und SR12 enthält. Die Speicherräder SR11 und SR12 werden dabei z.B. in Form einer Acht umschlungen (insbesondere bei höheren Abzugsgeschwindigkeiten). Die Temperatur $\vartheta_1$ der Kammer TK1 wird dabei vorzugsweise in einem Bereich zwischen 40 und 140° C gehalten. Am Ausgang der ersten temperierten Kammer TK1 ist eine Kühlstrecke KS (z.B. mit Wasserkühlung oder durch Luftstrom) vorgesehen, bevor die Lichtleitader LWA in eine zweite temperierte Kammer TK1 (Temperatur $\vartheta_2$) einlüft, die genauso aufgebaut ist wie die erste Kammer TK1. Im vorliegenden Beispiel ist angenommen, daß die Speicherräder SR21 und SR22 wie in der ersten Kammer TK1 in Form einer Acht umschlungen werden. Die Temperatur $\vartheta_2$ in dieser zweiten Kammer TK2 ist vorzugsweise in einem Bereich zwischen Raumtemperatur und 40° C gewählt. Am Ausgang der zweiten Kammer TK2 ist eine Dickenmeßeinrichtung DM vorgesehen, bevor die abgekühlte Lichtleitader LWA zu einem Raupenabzug RA gelangt. Am Ende der Fertigungslinie kann die Lichtleitader LWA entweder auf einem Tellerwickler AT oder auf eine Kabelspule TR aufgewickelt werden (in FIG 1 gestrichelt dargestellt).

Um die Längenzuordnung zwischen Lichtleitfaserbündel LWL12 und Lichtleitaderhülle H (in FIG 2) möglichst exakt zu bestimmen, erfolgt die Geschwindigkeitsmessung der Lichtleitaderhülle H jeweils an einem der Speicherräder in den Kammern TK1 bzw. TK2 nach Erreichen eines hinreichend stabilen Temperaturgleichgewichts. Dafür können an einem Speicherrad z.B. SR11 an dessen Außenrand Impulsmarken IM1 - IMn entlang des Umfangs verteilt sein, die bei Drehung des Speicherrades SR1 Impulse an einem Impulsgeber IG1 generieren oder es wird auf der Achse ein handelsüblicher Impulsgeber montiert. Die der Geschwindigkeit $v_1$ der Lichtleitaderhülle H bzw. des Speicherrades SR1 proportionale Impulsfolge $v_{11}$ gelangt in eine Meßeinrichtung ME. Ebenso wird bei einem Speicherrad (z.B. SR21) der zweiten Kammer TK2 verfahren, wo über den Impulsgeber IG2 die Geschwindigkeit $v_2$ der Lichtleitaderhülle H als Impulsfolge $v_{22}$ in die Meßeinrichtung ME gelangt, wo die Differenzbildung $\Delta$ v der Geschwindigkeiten $v_1$ und $v_2$ erfolgt. Durch einen Prozeßrechner wird daraus die relative Lichtleitfaserlänge ermittelt, die in einem Anzeigeinstrument AZ dargestellt werden kann. Weicht die angezeigte relative Faserlänge von einem gewünschten Sollwert ab (im Anzeigeinstrument AZ gestrichelt dargestellt) kann diese z.B. durch die Temperatur in einem Regelkreis nachgestellt werden. Die für die Längeneinstellung maßgebliche Änderung der Temperaturdifferenz $\vartheta_2 - \vartheta_1$ kann durch Regelung der Temperatur $\vartheta_1$ über die Heizstrecke HS1 in der ersten temperierten Kammer TK1 erfolgen. Es ist auch möglich, die Temperatur $\vartheta_2$ der zweiten Kammer TK2 über das Heizelement HS2 oder die Temperatur der Kühlstrecke KS zu ändern.

Es ist aber auch möglich, die Geschwindigkeiten $v_1$ bzw. $v_2$ durch selbständige Geschwindigkeitsmeßeinrichtungen VM1 und VM2 (in FIG 1 gestrichelt dargestellt) zu messen und der Meßeinrichtung ME zuzuführen. Die Lichtleitaderhülle H durchläuft dabei zwei Rollen, deren Umdrehungsgeschwindigkeit der Hüllendurchlaufgeschwindigkeit proportional ist. Es könnte auch die noch heiße Hülle der Lichtleitader LWA mit Meßmarken versehen werden, die zweimal je Zeiteinheit (einmal in der Kammer TK1 und einmal in der Kammer TK2) gezählt werden. Für die Markierung kann ein einfacher Offset-Drucker verwendet werden, der synchron angetrieben wird. Solange ein etwaiger Schlupf konstant gehalten wird, ist dies Verfahren sehr genau.

Anhand von FIG 2 sollen die Zusammenhänge zwischen Geschwindigkeit bzw. Länge der Lichtleitfaser LWL bei Umschlingung eines Speicherrades, z.B. SR11, näher erläutert werden.

Wird eine Lichtleitader LWA, deren Innendurchmesser di größer ist als der Durchmesser a der Lichtleitfaser LWL (bzw. Lichtleitfaserbündelersatzdurchmesser a), um ein Speicherrad SR11 mit dem Durchmesser D aufgewickelt, legt sich die Lichtleitfaser LWL an die radachsennahe Innenwand der Hülle H. Für die Berechnung der dabei auftretenden Fehllänge $\epsilon$- sind in FIG 2 noch die Wandstärke s der Hülle H, der Außendurchmesser d der Lichtleitader LWA, sowie der mittlere Lichtleitaderlaufdurchmesser Dm angegeben. Nach Fig. 1 und Fig. 2 läßt sich die am ersten Speicherrad SR11 auftretende Fehllänge $\epsilon$- wie folgt berechnen:

$$\varepsilon_{-} = \frac{\Delta l_2}{l} = \frac{Dm - (D + 2s + a)}{Dm} = \frac{d - 2s - a}{D + d} = \frac{di - a}{D + d} \qquad (1)$$

(mit den Umformungen Dm = D+d und d-2s = di). Die unter Voraussetzung freier Schrumpfung eintretende relative Verkürzung der Hülle H gegenüber der Lichtleitfaser LWL als Folge der Abkühlung ist

$$\frac{\Delta l_1}{l} = \int_{\vartheta_2}^{\vartheta_1} \alpha_H \cdot d\vartheta \qquad (2)$$

wobei $\alpha_H$ der Ausdehnungskoeffizient der Hülle H ist. Damit ergibt sich eine relative Faserlänge zu

$$\frac{\Delta l_{eff}}{l} = \frac{\Delta l_1}{l} - \frac{\Delta l_2}{l} = \int_{\vartheta_2}^{\vartheta_1} \alpha_H \cdot d\vartheta - \frac{di - a}{D + d} \qquad (3)$$

Da der Raddurchmesser D des ersten mit erhöhter Temperatur $\vartheta_1$ arbeitenden Speicherrades SR11 und die Abmessungen der Lichtleitader LWA die bei fester Temperatur $\vartheta_1$ auftretende Faserfehllänge $\epsilon_-$ recht genau festlegen (gemäß der in Gleichung (1) genannten Beziehung), ist die relative Faserlänge

$$\frac{\Delta l_{eff}}{l}$$

mittels eines Prozeßrechners ermittelbar, wenn die aus der Abkühlung durch die Kühlstrecke KS folgende Geschwindigkeitsdifferenz der Lichtleitaderhülle H vor und nach der Abkühlung gemessen werden kann. Unter Voraussetzung schlupffreien und fast kraftfreien Betriebes ist der Anteil

$$\int_{\vartheta_2}^{\vartheta_1} \alpha_H \cdot d\vartheta \qquad (3a)$$

gut meßbar und der Anteil

$$\frac{di - a}{D + d} \qquad (3b)$$

exakt rechenbar, so daß ein Prozeßrechner das resultierende

$$\frac{\Delta l_{eff}}{l}$$

errechnen und ggf. durch Änderung der Temperaturdifferenz $\vartheta_2 - \vartheta_1$ auf einen gewünschten Sollwert korrigieren kann. Umfangsunterschiede an den beiden Speicherrädern SR11 und SR21 können durch Eichung bei gleicher Temperatur eliminiert werden. Die unvermeidbare Ausdehnung des warmen Speicherrades SR11 gegenüber dem kalten SR21 ist ebenfalls leicht rechnerisch zu berücksichtigen. Die Speicherräder ohne Impulszähler (SR12,SR22) dienen nur der Temperaturanpassung.

Der mittlere Ausdehnungskoeffizient des Hüllenkunststoffes (ca. $1 \times 10^{-4}$/K) und der des Speicherrades (1,2 bis $2{,}3 \times 10^{-5}$ /K) sind deutlich unterschiedlich. Nach erfolgter Eichung und Korrektur ist mit dieser Methode in jedem Fall eine gute relative Genauigkeit zu erzielen, wobei unter Verwendung von Impulsgebern die Impulshäufigkeit je Umdrehung die Regelgeschwindigkeit bestimmt.

Nachfolgend wird ein Zahlenbeispiel für einen Meßvorgang nach der Erfindung angegeben. Dabei ist davon ausgegangen, daß die beiden Meßräder SR11 und SR21 bei der gleichen Temperatur z.B. von 20° C
(d.h. $\vartheta_1 = \vartheta_2$ ) geeicht worden sind.

Im praktischen Betrieb d.h. während der Fertigung) ist natürlich zumindest $\vartheta_1$ höher und es wird angenommen, daß der Temperaturfühler TF1 in der ersten Kammer TK1 120° C und der Temperaturfühler TF2 in der zweiten Kammer TK2 20° C mißt. Es gilt also:
$\vartheta_1 = 120°C$; $\vartheta_2 = 20°C$; $\Delta\vartheta = 100°C$
Die Temperaturwerte $\vartheta_1$ und $\vartheta_2$ von den Meßfühlern TF1 und TF2 werden zur Meßeinrichtung ME übertragen, wo der infolge der höheren Temperatur $\vartheta_1 = 120°C$ der Kammer TK1 (gegenüber der vorangegangenen Eichung) sich ergebende Temperatur-Korrekturfaktor k berechnet wird und nach der Gleichung

$$D^* = D^{(1-\alpha_R \Delta\vartheta)} = D \cdot k \qquad (4)$$

wobei D der Außendurchmesser für die Auflage der Lichtwellenleiterader LWA (bei der Eichtemperatur) des Meßrades SR11, D* dessen Durchmesser bei einer höheren Betriebstemperatur und $\alpha_R$ dessen Temperaturausdehnungskoeffizient ist.

Geht man davon aus, daß D = 900 mm ist (der Wert von D sollte zwischen 400 mm und 1100 mm, also möglichst groß gewählt werden, um die Genauigkeit zu erhöhen) dann ergibt sich bei einem
$\alpha_R = 2{,}3 \cdot 10^{-5}$
$k = 1 + 2{,}3 \cdot 10^{-5} \cdot 100 = 1{,}0023$
Außerdem gilt unter der Annahme
D = 900 mm, d = 5 mm, di = 3 mm, a = 0,5 mm
nach Gleichung (1) die Beziehung

$$\frac{\Delta l_2}{l} = \frac{di - a}{d + D} = \frac{2{,}5}{905} = 2{,}76 \cdot 10^{-3}.$$

Ergibt z.B. die Messung der Geschwindigkeit $v_1$ des Meßrades SR11 bei der Temperatur $\vartheta_1 = 120°C$ den Wert $v_1 = 20$ m/min, so ist der tatsächliche Geschwindigkeitswert $v_1^*$ da praktisch nur Winkelwerte gemessen werden, natürlich höher und zwar um den Korrekturfaktor k, also

$$V_1^* = v_1 \cdot k = 20 \text{ m/min} \cdot 1{,}0023 = 20{,}046 \text{ m/min}.$$

Ergibt z.B. die Messung der Geschwindigkeit $v_2$ des Meßrades SR21 den Wert $v_2 = 19{,}876$ m/min so ergibt sich für die Geschwindigkeitsdifferenz $\Delta$ v der Wert

$$\Delta v = v_1^* - v_2 = 20{,}046 - 19{,}886 = 0{,}170 \text{ m/min} \qquad (5)$$

Für

$$\frac{\Delta l_1}{l}$$

nach Gleichung (2) kann der Wert der relativen Geschwindigkeitsdifferenz eingesetzt werden, da dieser Wert der tatsächlichen Schrumpfung entspricht. also gilt

$$\frac{\Delta l_1}{l} = \frac{\Delta v}{v_2} = \frac{v_1^* - v_2}{v_2} = \frac{0{,}170}{19{,}876} = 0{,}0086 \qquad (2a)$$

Die effektive Faser-Überlänge beträgt also nach Gleichung (3) unter Einsetzen von (2a)

$$\frac{\Delta l_{eff}}{l} = \frac{\Delta l_1}{l} - \frac{\Delta l_2}{l} = 8{,}6 \cdot 10^{-3} - 2{,}76 \cdot 10^{-3} =$$

$$5{,}84 \cdot 10^{-3}$$

Dabei ist es von besonderer Bedeutung, daß die Größen $v_1$, $v_1^*$, $v_2$ und $\Delta$ v nur als Relativmessungen in das Gesamtergebnis eingehen, so daß etwaige gemeinsame Fehler (z.B. durch einen noch so kleinen Schlupf, durch Ungleichmäßigkeiten in der Geometrie der Aderhülle o. dgl.) sich im Endergebnis nicht bemerkbar machen, weil sie in beide Messungen $v_1$ und $v_2$ in gleichem Maße auftreten.

Auch ist auf diese Weise eine weitgehend exakte Bestimmung (durch Messung) des Wertes des Integrals nach Gleichung (2) möglich, während eine Berechnung infolge des großen Temperaturunterschieds und der damit verbundenen Unsicherheiten im Wert von $\alpha_H$ relativ fehlerhaft sein würde. Rechnet man zur Kontrolle aufgrund der Geometrie der Meßräder und aufgrund von Einzelgrößen anhand von Fig. 2 die Überlänge mit den vorstehend angenommenen Zahlenwerten nach, so ergibt sich für sonst gleiche Bedingungen wie beim vorhergehenden Geschwindigkeits-Meßbeispiel folgendes:
Die Bestimmung von

$$\frac{\Delta l_1}{l}$$

nach Gleichung (2) ergibt für ein $\alpha_H \approx 10^{-5}$

$$= \int_{\vartheta_2}^{\vartheta_1} \alpha_H \cdot d\vartheta \approx \alpha_H \cdot \Delta\vartheta \approx 8\ 10^{-5} \cdot 100 \approx 8\ 10^{-3}$$

Dann ist nach Gleichung (3)

$$\frac{\Delta l_{eff}}{l} = \frac{\Delta l_1}{l} - \frac{\Delta l_2}{l} =$$

$$8\ 10^{-3} - 2{,}76\ 10^{-3} = 5{,}34\ 10^{-3}.$$

Dieser rechnerische Wert entspricht in etwa dem durch Messung der relativen Geschwindigkeitsdifferenz nach Gleichung (2a) des vorangegangenen Beispiels durch Geschwindigkeitsmessung ermittelten und anschließend korrigierten tatsächlichen Wert.

Die Schritte der Messung sind somit:

1. Eichung der Meßräder SR11 und SR21 bei gleicher Temperatur (d.h. $\vartheta_1 = \vartheta_2$) mittels eines Meßseiles o. dgl., auf Geschwindigkeitsdifferenz $\Delta v = v_2 - v_1 = 0$, d.h. hier ebenfalls durch Relativmessung bei den Impulsgebern $IG_1$ und $IG_2$.
2. Winkelabweichung (= Geschwindigkeitsdifferenz) zwischen den Meßrädern SR11 und SR21 während des Betriebes der Fertigungslinie nach Fig. 1 messen, d.h. Bestimmung von $v_1$ und $v_2$ während der Produktion der Lichtwellenleiterader LWA.
3. Temperaturkorrektur für die Temperaturdifferenz (gegenüber der Eichung) $\Delta\vartheta = \vartheta_1 - \vartheta_2$ berücksichtigen durch Korrekturfaktor $k = 1 + \alpha_R\Delta\vartheta$ mit $v_1^* = v_1 \cdot k$
4. Bestimmen der relative Geschwindigkeitsdifferenz in der Meßeinrichtung ME mittels eines dort angeordneten Prozeßrechners als Maß des Wertes

$$\frac{\Delta l_1}{l} = \frac{v_1^* - v_2}{v_2} = \frac{\Delta v}{v_2}$$

5. Bestimmung der effektiven Faserüberlänge nach Gleichung (3)

$$\frac{\Delta l_{eff}}{l} = \frac{\Delta v}{v_2} - \frac{\Delta l_2}{l}$$

6. Gegebenenfalls (bei Abweichung vom Sollwert der effektiven Überlänge)

$$\frac{\Delta l_{eff}}{l}$$

um einen entsprechenden Wert nachregeln (z.B. durch Einstellen der Heizung HS1 und damit der Temperatur $\vartheta_1$)

## Patentansprüche

1. Verfahren zur Bestimmung einer dem Längenunterschied zwischen einer Lichtleitfaser (LWL) und einer Lichtleitaderhülle (H) proportionalen Meßgröße, wobei die die Lichtleitfaser (LWL) lose enthaltende Lichtleitaderhülle (H) mindestens eine Kühlstrecke (KS) durchläuft,
**dadurch gekennzeichnet,**
daß die Geschwindigkeit der Lichtleitaderhülle (H) sowohl vor als auch nach der Kühlstrecke (KS) bestimmt wird und daß die gesuchte Meßgröße durch Differenzbildung der beiden gemessenen Geschwindigkeiten ($v_1$,$v_2$) gebildet wird.

2. Verfahren nach Anspruch 1,
**dadurch gekennzeichnet,**

daß der Unterschied der Temperaturen ($\vartheta_1 - \vartheta_2$) vor und nach der Kühlstrecke (KS) in Abhängigkeit von der Meßgröße variiert wird.

**3.** Verfahren nach einem der vorhergehenden Ansprüche,
**dadurch gekennzeichnet,**
daß die Meßgröße als Steuergröße in einem Temperatur-Regelkreis verwendet wird.

**4.** Verfahren nach einem der vorhergehenden Ansprüche,
**dadurch gekennzeichnet,**
daß die aus der Lichtleitfaser (LWL) und Lichtleithülle (LH) gebildete Lichtleitader (LWA) vor und nach der Kühlstrecke (KS) über je mindestens ein Speicherrad (SR11;SR21) geführt wird.

**5.** Verfahren nach Anspruch 4,
**dadurch gekennzeichnet,**
daß die Temperatur ($\vartheta_1$) im Bereich des Speicherrades (SR11) vor der Kühlstrecke (KS) in einem Bereich zwischen 40 und 140 °C gehalten wird.

**6.** Verfahren nach einem der Ansprüche 4 oder 5,
**dadurch gekennzeichnet,**
daß die Temperatur ($\vartheta_2$) im Bereich des Speicherrades (SR21) nach der Kühlstrecke (KS) in einem Bereich zwischen der Raumtemperatur und 40° C gehalten wird.

**7.** Verfahren nach einem der Ansprüche 4 - 6,
**dadurch gekennzeichnet,**
daß die Lichtleitader (LWA) mit einem Umschlingwinkel von mehr als 180° um das Speicherrad (z.B. SR11) geführt wird.

**8.** Verfahren nach einem der Ansprüche 4 - 7,
**dadurch gekennzeichnet,**
daß bei Verwendung von zwei Speicherrädern (SR11,SR12) innerhalb einer Temperaturkammer (z.B. TK1) die Lichtleitader (LWA) in Form einer Acht um die Speicherräder (SR11,SR12) geführt wird.

**9.** Verfahren nach einem der vorhergehenden Ansprüche,
**dadurch gekennzeichnet,**
daß die Abkühlung der Lichtleitader (LWA) in der Kühlstrecke (KS) durch ein Wasserbad vorgenommen wird.

**10.** Verfahren nach einem der Ansprüche 1 - 8,
**dadurch gekennzeichnet,**
daß die Abkühlung der Lichtleitader (LWA) in der Kühlstrecke (KS) durch einen Luftstrom vorgenommen wird.

**11.** Verfahren nach einem der Ansprüche 4 - 10,
**dadurch gekennzeichnet,**
daß eine der Geschwindigkeitsmessungen der Lichtleitaderhülle (H) an mindestens einem als Meßrad dienenden Speicherrad (SR11) vor der Kühlstrecke (KS) vorgenommen wird.

**12.** Verfahren nach einem der Ansprüche 4 - 11,
**dadurch gekennzeichnet,**
daß eine der Geschwindigkeitsmessungen der Lichtleitaderhülle (LH) an mindestens einem als Meßrad dienenden Speicherrad (SR21) nach der Kühlstrecke (KS) vorgenommen wird.

**13.** Verfahren nach einem der vorhergehenden Ansprüche,
**dadurch gekennzeichnet,**
daß die Geschwindigkeitsmessung durch eine Impulszählung vorgenommen wird.

**14.** Verfahren nach einem der vorhergehenden Ansprüche,
**dadurch gekennzeichnet,**

daß die Geschwindigkeitsmessung durch zusätzlich vorgesehene Geschwindigkeitsmeßeinrichtungen (VM1,VM2) vorgenommen wird.

**15.** Verfahren nach einem der vorhergehenden Ansprüche,
**dadurch gekennzeichnet,**
daß die Meßwerte der Geschwindigkeiten ($v_1$, $v_2$ ) zu einer Meßeinrichtung (ME) übertragen und dort ausgewertet werden.

**16.** Verfahren nach Anspruch 15,
**dadurch gekennzeichnet,**
daß die Meßwerte der Temperatur ($\vartheta_1$,$\vartheta_2$) vor und nach der Kühlstrecke (KS) bestimmt und zur Meßeinrichtung (ME) übertragen werden.

**17.** Verfahren nach Anspruch 16,
**dadurch gekennzeichnet,**
daß von der Meßeinrichtung (ME) Steuerbefehle für die Einstellung zumindest eines der Temperaturwerte ($\vartheta_1$,$\vartheta_2$) zu entsprechenden Heizeinrichtungen (HS1,HS2) übertragen werden.

**18.** Verfahren nach einem der vorhergehenden Ansprüche,
**dadurch gekennzeichnet,**
daß aus den gemessenen Geschwindigkeitswerten ($v_1$,$v_2$) die relative Geschwindigkeitsdifferenz

$$\left(\frac{v_1 - v_2}{v_2}\right)$$

bestimmt wird.

**19.** Verfahren nach einem der Ansprüche 11 - 18,
**dadurch gekennzeichnet,**
daß die Eichung der als Meßräder dienenden Speicherräder (SR11, SR21) bei gleicher Temperatur (d.h. $\vartheta_1$, $=\vartheta_2$) mittels eines Meßseiles auf Geschwindigkeitsdifferenz Null ($v_2$ - $v_1$ = 0) vorgenommen wird.

**20.** Verfahren nach einem der vorhergehenden Ansprüche 11 - 19,
**dadurch gekennzeichnet,**
daß eine Temperaturkorrektur der Geschwindigkeitsmessung (z.B. von $v_1$) für die Temperaturdifferenz $\Delta\vartheta = \vartheta_1 - \vartheta_2$ zwischen den Meßrädern (SR11,SR21) durch einen die temperaturabhängige Durchmesseränderung berücksichtigenden Korrekturfaktor $k = 1 + \alpha_R \cdot \Delta\vartheta$ vorgenommen wird, wobei $\alpha_R$ der Temperaturausdehnungskoeffizient der Meßräder ist.

**21.** Verfahren nach einem der Ansprüche 18 - 20,
**dadurch gekennzeichnet,**
daß die effektive Faserüberlänge aus der relativen Geschwindigkeitsdifferenz

$$\left(\frac{v_1 - v_2}{v_2}\right.$$

abzüglich einer die Fehllänge $\epsilon_-$ berücksichtigenden Korrekturgröße bestimmt wird, wobei für die Fehlläuge gilt

$$\varepsilon_- = \frac{di - a}{D + d},$$

mit:

di = Innendurchmesser der Lichtleitader (LWA)
a = Außendurchmesser des Lichtwellenleiters (LWL)
D = effektiver Meßrad-Durchmesser
d = Außendurchmesser der Lichtleitader (LWA)

## Claims

1. Method for determining a measured quantity proportional to the length difference between an optical fibre (LWL) and an optical waveguide sheath (H), the optical waveguide sheath (H), which loosely contains the optical fibre (LWL), being passed through at least one cooling path (KS), characterised in that the speed of the optical waveguide sheath (H) is determined both upstream and downstream of the cooling path (KS), and in that the measured quantity sought is formed by subtracting the two measured speeds ($v_1$, $v_2$).

2. Method according to Claim 1, characterised in that the temperature difference ($\theta_1$ - $\theta_2$) is varied upstream and downstream of the cooling path (KS) as a function of the measured quantity.

3. Method according to one of the preceding claims, characterised in that the measured quantity is used as the controlled variable in a temperature-controlled circuit.

4. Method according to one of the preceding claims, characterised in that the optical waveguide (LWA) formed from the optical fibre (LWL) and optical waveguide sheath (H) is guided upstream and downstream of the cooling path (KS) over at least one storage wheel (SR11; SR21), in each case.

5. Method according to Claim 4, characterised in that in the region of the storage wheel (SR11) upstream of the cooling path (KS) the temperature ($\theta_1$) is maintained in a range of between 40 and 140 °C.

6. Method according to one of Claims 4 or 5, characterised in that in the region of the storage wheel (SR21) downstream of the cooling path (KS) the temperature ($\theta_2$) is maintained in a range of between room temperature and 40 °C.

7. Method according to one of Claims 4 - 6, characterised in that the optical waveguide (LWA) is guided around the storage wheel (for example SR11) at an angle of wrap of more than 180°.

8. Method according to one of Claims 4 - 7, characterised in that using two storage wheels (SR11, SR12) inside a temperature chamber (for example TK1) the optical waveguide (LWA) is guided around the storage wheels (SR11, SR12) in the form of a figure-of-eight.

9. Method according to one of the preceding claims, characterised in that the cooling of the optical waveguide (LWA) is performed in the cooling path (KS) by a water bath.

10. Method according to one of Claims 1 - 8, characterised in that the cooling of the optical waveguide (LWA) is performed in the cooling path (KS) by an airstream.

11. Method according to one of Claims 4 - 10, characterised in that one of the speed measurements of the optical waveguide sheath (H) is performed at at least one storage wheel (SR11) serving as measuring wheel upstream of the cooling path (KS).

12. Method according to one of Claims 4 - 11, characterised in that one of the speed measurements of the optical waveguide sheath (H) is performed at at least one storage wheel (SR12) serving as measuring wheel downstream of the cooling path (KS).

13. Method according to one of the preceding claims, characterised in that the speed measurement is performed by pulse counting.

14. Method according to one of the preceding claims, characterised in that the speed measurement is performed by additionally provided speed measuring devices (VM1, VM2).

**15.** Method according to one of the preceding claims, characterised in that the measured values of the speeds ($v_1$, $v_2$) are transmitted to a measuring device (ME) and evaluated there.

**16.** Method according to Claim 15, characterised in that the measured values of the temperature ($\theta_1$, $\theta_2$) are determined upstream and downstream of the cooling path (H) and transmitted to the measuring device (ME).

**17.** Method according to Claim 16, characterised in that control commands for setting at least one of the temperature values ($\theta_1$, $\theta_2$) are transmitted from the measuring device (ME) to corresponding heaters (HS1, HS2).

**18.** Method according to one of the preceding claims, characterised in that the relative speed difference

$$\left(\frac{v_1 - v_2}{v_2}\right)$$

is determined from the measured speed values ($v_1$,$v_2$).

**19.** Method according to one of Claims 11 - 18, characterised in that the calibration of the storage wheels (SR11, SR21) serving as measuring wheels to a zero speed difference ($v_2 - v_1 = 0$) is performed at an identical temperature (that is to say $\theta_1 = \theta_2$) by means of a measuring cable.

**20.** Method according to one of the preceding Claims 11 - 19, characterised in that a temperature correction of the speed measurement (for example of $v_1$) for the temperature difference $\Delta\theta = \theta_1 - \theta_2$ between the measuring wheels (SR11, SR21) is performed by a correction factor $k = 1 + \alpha_R \cdot \Delta\theta$ taking account of the temperature-dependent diameter change, $\alpha_R$ being the coefficient of thermal expansion of the measuring wheels.

**21.** Method according to one of Claims 18 - 20, characterised in that the effective excess fibre length is determined from the relative speed difference

$$\left(\frac{v_1 - v_2}{v_2}\right)$$

minus a correction quantity taking account of the mislength $\epsilon_-$, it being applicable for the mislength that

$$\epsilon_- = \frac{di - a}{D + d}$$

where:

| | | |
|---|---|---|
| di | = | inside diameter of the optical waveguide (LWA), |
| a | = | outside diameter of the optical fibre (LWL), |
| D | = | effective measuring wheel diameter, |
| d | = | outside diameter of the optical waveguide (LWA). |

**Revendications**

**1.** Procédé pour déterminer une grandeur de mesure proportionnelle à la différence de longueur entre une fibre optique (LWL) et une gaine (H) d'un conducteur formant guide de lumière, la gaine (H) du conducteur formant guide de lumière, qui contient de façon lâche la fibre optique (LWL), traversant au moins une section de refroidissement (KS), caractérisé par le fait qu'il consiste à déterminer que la vitesse de la gaine (H) du conducteur formant guide de lumière aussi bien en amont qu'en aval de la

section de refroidissement (KS) et que la grandeur de mesure recherchée est formée au moyen de la formation de la différence des deux vitesses ($v_1$,$v_2$) mesurées.

2. Procédé suivant la revendication 1, caractérisé par le fait que la différence entre les températures ($\vartheta_1$-$\vartheta_2$) est modifiée en amont et en aval de la section de transmission (KS) en fonction de la grandeur de mesure.

3. Procédé suivant l'une des revendications précédentes, caractérisé par le fait que la grandeur de mesure est utilisée en tant que grandeur de commande dans un circuit de réglage de la température.

4. Procédé suivant l'une des revendications précédentes, caractérisé par le fait que le conducteur formant guide de lumière (LWA), formé par la fibre optique (LWL) et la gaine (LH) de guidage de la lumière circule, en amont et en aval de la section de refroidissement (KS), respectivement sur au moins une roue à rayons (SR11;SR21).

5. Procédé suivant la revendication 4, caractérisé par le fait que la température ($\vartheta_1$) au voisinage de la roue à effet accumulateur rayons (SR11) en amont de la section de refroidissement (KS) est maintenue dans une plage comprise entre 40 et 140°C.

6. Procédé suivant l'une des revendications 4 ou 5, caractérisé par le fait que la température ($\vartheta_2$) au voisinage de la roue à effet accumulateur (SR21) en aval de la section de refroidissement (KS) est maintenue dans une plage comprise entre la température ambiante et 40°C.

7. Procédé suivant l'une des revendications 4-6, caractérisé par le fait que le conducteur formant guide de lumière (LWA) circule sur la roue à effet (par exemple SR11), avec un angle d'enveloppement de plus de 180°.

8. Procédé suivant l'une des revendications 4-7, caractérisé par le fait que, dans le cas de l'utilisation de deux roues à effet accumulateur (SR11,SR12) à l'intérieur d'une chambre de mise en température (Par exemple TK1), le conducteur formant guide de lumière (LWA) circule sous la forme d'un huit autour des roues à effet accumulateur (SR11,SR12).

9. Procédé suivant l'une des revendications précédentes, caractérisé par le fait que le refroidissement du conducteur formant guide de lumière (LWA) dans la section de refroidissement (KS) est réalisé dans un bain d'eau.

10. Procédé suivant l'une des revendications 1-8, caractérisé par le fait que le refroidissement du conducteur formant guide de lumière (LWA) dans la section de refroidissement (KS) est réalisé au moyen d'un courant d'air.

11. Procédé suivant l'une des revendications 4-10, caractérisé par le fait que l'une des mesures de vitesse de la gaine (H) du conducteur formant guide de lumière est réalisée sur au moins une roue à rayons (SR11) utilisée comme roue de mesure, en amont de la section de refroidissement (KS).

12. Procédé suivant l'une des revendications 4-11, caractérisé en ce qu'une des mesures de vitesse de la gaine (LH) du conducteur formant guide de lumière est réalisée sur au moins une roue à effet accumulateur (SR21) utilisée comme roue de mesure, en aval de la section de refroidissement (KS).

13. Procédé suivant l'une des revendications précédentes, caractérisé par le fait que la mesure de la vitesse est réalisée au moyen d'un comptage d'impulsions.

14. Procédé suivant l'une des revendications précédentes, caractérisé par le fait que la mesure de la vitesse est réalisée à l'aide de dispositifs de mesure de vitesse (VM1,VM2) prévus en supplément.

15. Procédé suivant l'une des revendications précédentes, caractérisé par le fait que les valeurs de mesure des vitesses ($v_1$,$v_2$) sont transmises à un dispositif de mesure (ME) et y sont évaluées.

16. Procédé suivant la revendication 15, caractérisé par le fait que les valeurs de mesure de la température

($\vartheta_1$,$\vartheta_2$) en amont et en aval de la section de refroidissement (KS) sont déterminées et transmises au dispositif de mesure (ME).

**17.** Procédé suivant la revendication 16, caractérisé par le fait que le dispositif de mesure (ME) transmet des instructions de commande pour le réglage d'au moins l'une des valeurs de température ($\vartheta_1$,$\vartheta_2$) à des dispositifs de chauffage correspondants (HS1,HS2).

**18.** Procédé suivant l'une des revendications précédentes, caractérisé par le fait que la différence de vitesse relative

$$\left(\frac{v_1 - v_2}{v_2}\right)$$

est déterminée à partir des valeurs de vitesse mesurées ($v_1$,$v_2$).

**19.** Procédé suivant l'une des revendications 11-18, caractérisé par le fait que l'étalonnage des roues à effet accumulateur (SR11,SR21) utilisées comme roues de mesure est réalisé à une même température (c'est-à-dire $\vartheta_1 = \vartheta_2$), à l'aide d'un câble de mesure pour une différence de vites
se nulle ($v_2$-$v_1$ = 0).

**20.** Procédé suivant l'une des revendications précédentes 11-19, caractérisé par le fait qu'une correction, en fonction de la température, de la mesure de vitesse (par exemple $v_1$) pour la différence de température $\Delta\vartheta = \vartheta_1 - \vartheta_2$ entre les roues de mesure (SR11,SR21) est réalisée au moyen d'un facteur de correction $k = 1 + \alpha_R.\Delta\vartheta$, qui prend en compte la variation de diamètre, qui est fonction de la température, $\alpha_R$ étant le coefficient de dilatation thermique des roues de mesure.

**21.** Procédé suivant l'une des revendications 18-20, caractérisé par le fait que la surlongueur effective de la fibre est déterminée à partir de la différence de vitesse relative

$$\left(\frac{v_1 - v_2}{v_2}\right),$$

diminuée d'une grandeur de correction prenant en compte l'écart de longueur $\epsilon_-$, l'écart de longueur ayant pour valeur

$$\varepsilon_- = \frac{di - a}{D + d},$$

avec

| | |
|---|---|
| di = | diamètre intérieur du conducteur formant guide de lumière (LWA) |
| a = | diamètre extérieur du guide d'ondes optiques (LWL) |
| D = | diamètre effectif de la roue de mesure |
| d = | diamètre extérieur du conducteur formant guide de lumière (LWA). |

FIG 1

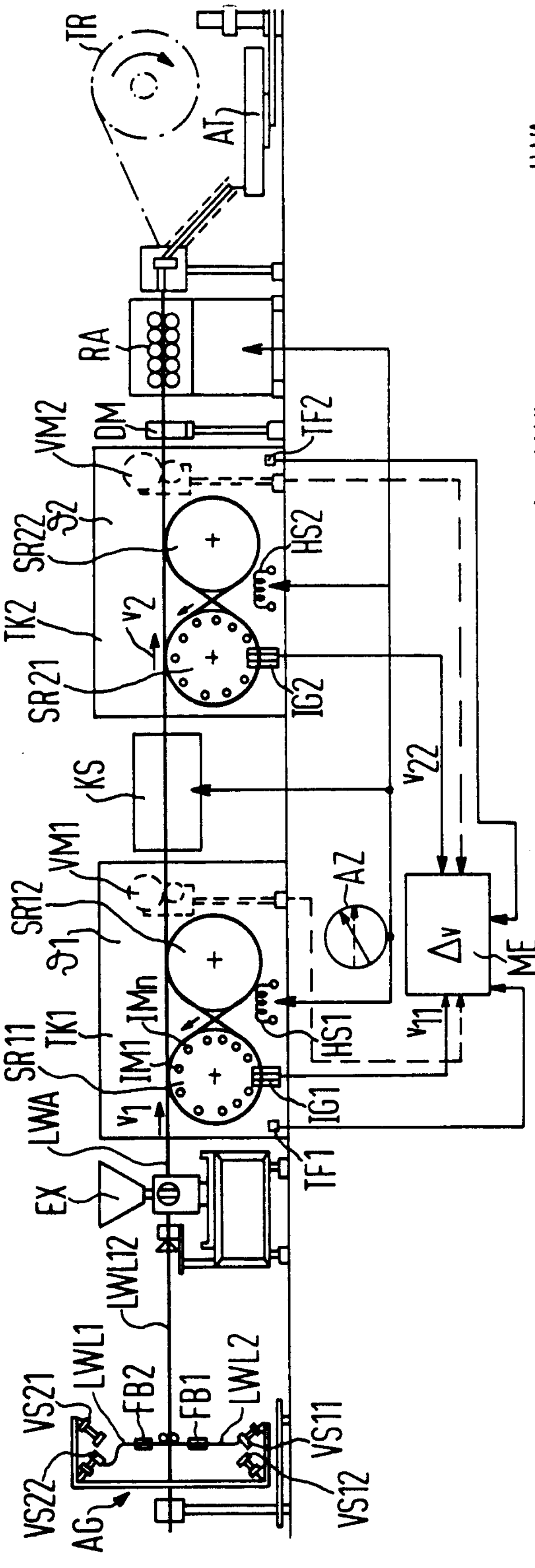
TR
AT
RA
DM
VM2
TF2
SR22
ϑ2
HS2
TK2
v2
SR21
IG2
KS
v22
VM1
SR12
ϑ1
AZ
Δv
ME
TK1
IMn
IM1
SR11
HS1
v11
v1
LWA
IG1
TF1
EX
LWL12
LWL1
VS21
FB2
FB1
LWL2
VS22
VS11
VS12
AG

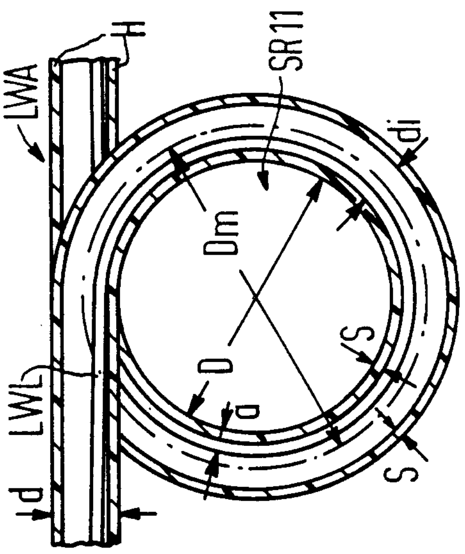
LWA
H
SR11
di
Dm
D
S
d
LWL
S
d

FIG 2